# DEMANDE DE BREVET EUROPEEN

(11) **EP 1 834 725 A1**
(43) Date de publication de la demande: **19.09.2007**
(21) Numéro de dépôt: 07300819.5
(22) Date de dépôt: 23.02.2007
(51) Int. Cl.: B23K 1/005, B23K 103/04, B23K 101/34

(54) **Soudo-brasage de pièces en acier avec fil en cuivre et mélange gazeux oxydant**

(30) Priorité: 15.03.2006 FR 0650880
(71) Demandeur: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Dubet, Olivier, 95130 Franconville (FR); Revel, Olivier, 95480 Pierrelaye (FR); Briand, Francis, 75009 Paris (FR)
(74) Mandataire: Pittis, Olivier

(57) **Abrégé**

L'invention porte sur un procédé de soudo-brasage de pièces en acier mettant en oeuvre un faisceau laser, par exemple de type Nd :YAG, CO2, à fibre ou à diodes, un fil fusible étant que métal d'apport, et un mélange gazeux en tant que protection gazeuse, de manière à réaliser un joint soudo-brazé entre les pièces. Le fil fusible contient du cuivre et le mélange gazeux contient de 40 à 60% d'oxygène et d'au moins gaz choisi parmi l'argon, l'azote et l'hélium pour le reste.

## Description

L'invention porte sur un procédé de soudo-brasage de pièces en acier, de préférence en acier revêtu, par faisceau laser, en particulier de type Nd :YAG, avec apport de métal via un fil fusible à base de cuivre et mise en place d'une protection gazeuse oxydante appropriée.

Le procédé de « soudo-brasage laser » est un procédé de soudage bien connu mettant en oeuvre un fil fusible et un faisceau laser généré par un générateur laser, par exemple de type Nd :YAG, dans lequel le fil est fondu par le faisceau laser de manière à créer un joint de soudo-brasage entre plusieurs pièces métalliques à assembler ensemble.

Ce procédé est principalement utilisé dans l'industrie automobile pour la réalisation d'assemblage de pièces de carrosseries, tels les toits, les coffres..., en acier revêtu, c'est-à-dire galvanisé ou électro-zingué.

Ce procédé est apprécié dans l'industrie pour ses avantages en termes de productivité, en particulier vitesse d'assemblage et de faible parachèvement nécessaire, et de qualité, à savoir esthétique, faible déformation des pièces, dégradation limitée de la couche protectrice superficielle de zinc...

Ce procédé peut être mis en oeuvre avec ou sans gaz protecteur.

Toutefois, en l'absence de protection gazeuse, il survient des problèmes d'aspect de cordon obtenu, notamment une forte rugosité du cordon, un dépôt de fumées sur les bords du cordon et forme de cordon perturbée.

Afin d'éviter ces problèmes, il est donc préférable de mettre en oeuvre ce procédé sous protection gazeuse. Ainsi, l'utilisation d'un gaz de protection inerte, tel l'argon, l'azote ou l'hélium, permet d'obtenir un cordon plus lisse et globalement plus propre, c'est-à-dire avec moins de dépôts de fumées, qu'en l'absence de gaz.

Cependant, la mise en oeuvre d'un gaz inerte engendre une perte de productivité, en particulier une diminution de la vitesse de soudo-brasage.

Pour tenter d'y remédier, le document WO-A-2004/014599 propose d'utiliser un mélange gazeux contenant de l'argon et un ou plusieurs composés actifs choisis parmi le CO₂, l'oxygène, l'hydrogène et l'azote en une proportion allant jusqu'à 30% en volume, de préférence du CO₂, pour soudo-braser des pièces en acier, en aluminium ou en alliage d'aluminium.

Toutefois, les résultats obtenus avec ce gaz ne montrent pas d'amélioration significative du cordon de soudage ainsi réalisé.

Le problème qui se pose dès lors est d'améliorer les procédés existants de soudo-brasage de pièces en acier par laser, en particulier laser Nd :YAG, de manière à obtenir un cordon présentant un bel aspect de surface et ce, sans que cela ne soit au détriment de la productivité.

Une solution est alors un procédé de soudo-brasage de pièces en acier mettant en oeuvre un faisceau laser, un fil fusible étant que métal d'apport, et un mélange gazeux en tant que protection gazeuse, de manière à réaliser un joint soudo-brasé entre lesdites pièces, caractérisé en ce que :
- le fil fusible contient du cuivre et
- le mélange gazeux contient de 40 à 60% d'oxygène et d'au moins gaz choisi parmi l'argon, l'azote et l'hélium pour le reste.

Selon le cas, le procédé de l'invention peut comprendre l'une ou plusieurs des caractéristiques suivantes :
- le mélange gazeux contient de 45 à 55% d'oxygène.
- le mélange gazeux contient environ 50 % d'oxygène.
- le mélange gazeux contient de l'argon.
- le fil fusible est formé d'un alliage de cuivre et de silicium ou d'aluminium.
- les pièces sont en acier revêtu.
- le faisceau laser est obtenu au moyen d'un générateur laser de type Nd :YAG, de type CO₂, de type à fibre dopée à l'ytterbium, à diodes, ou tout autre dispositif laser apte à fournir un faisceau d'une longueur d'onde de 1.06 µm.
- le gaz est distribué par une buse comportant une échancrure ou un orifice traversé par le faisceau laser.
- le débit de gaz est compris entre 5 et 30 l/min.
- le diamètre de fil est compris entre 0.8 et 2.4 mm.

Le procédé de l'invention repose donc sur une utilisation combinée d'un gaz oxydant de composition spécifique associé à un type de fil fusible particulier à base de cuivre pour soudo-braser des pièces en acier, en particulier en acier revêtu de zinc. La combinaison particulière gaz oxydant/fil de cuivre selon l'invention permet de tirer partie, de façon très bénéfique, de l'absorption du faisceau laser par le cuivre du fil.

En effet, normalement, l'absorption d'un faisceau laser par du cuivre est limitée, à savoir de l'ordre d'à peine 16.1 % en phase liquide (% de l'énergie incidente du faisceau laser). Cependant, cette valeur d'absorption augmente si l'on met en oeuvre un gaz de protection fortement oxydant afin de former, à la surface du métal exposé au faisceau, un oxyde qui est beaucoup plus absorbant que le métal originel.

Une stabilité de composition et distribution du flux gazeux de protection donne lieu à une oxydation constante et donc un apport d'énergie stable au métal d'apport, ce qui permet d'obtenir une fusion régulière du métal d'apport.

Les inventeurs de la présente invention ont alors eu l'idée de tirer partie de ces phénomènes pour améliorer les procédés de soudo-brasage laser existants.

En effet, l'association d'un métal d'apport cuivreux et d'un gaz de protection comportant un ou plusieurs gaz neutres ou inertes, et plus de 40% d'oxygène, typiquement un mélange binaire formé de 50% en volume d'oxygène et de 50% en volume d'un gaz neutre ou inerte, tel l'argon, l'azote ou l'hélium, lequel gaz est amené au niveau de l'impact du faisceau laser par une buse de distribution appropriée, permet en soudo-brasage laser, grâce à l'action de l'oxygène sur le cuivre, de créer un oxyde absorbant mieux le faisceau laser et d'augmenter ainsi les performances en termes de productivité, c'est-à-dire vitesse et/ou quantité de métal d'apport fondu, et de qualité, notamment aspect de cordon et mouillage accru.

Dans le cadre de l'invention, on peut utiliser tout buse de distribution de gaz apte à stabiliser et à fiabiliser la protection gazeuse et donc à régulariser l'oxydation du métal d'apport.

A ce titre, la buse latérale 3, dans laquelle a été usinée une fente pour laisser passer le faisceau laser 1 qui vient fondre le fil 2, décrite dans le document FR-A-0107245 et schématisée sur la Figure 4 ci-jointe, est particulièrement bien adaptée car elle permet d'améliorer la constance du mélange gazeux distribué dans la zone d'interaction, contrairement à certaines buses classiques cylindriques qui ne conduisent pas à une couverture gazeuse efficace.

En effet, il a été observé qu'avec de telles buses classiques, dans certaines configurations, la couverture gazeuse obtenue peut être polluée par des rentrées d'air ambiant, donc des polluants atmosphériques venant perturber le cordon en cours de réalisation. Ceci s'explique par le fait que ces buses traditionnelles doivent généralement être positionnées en retrait par rapport au bain de fusion, ce qui autorise des entrées d'air intempestives dans la protection gazeuse.

Dans tous les cas, lors de la mise en oeuvre du procédé, on prendra soin à contenir la dispersion du jet de gaz à la sortie de la buse de manière à obtenir un écoulement le plus laminaire et unidimensionnel possible à la surface des tôles, au niveau de la zone d'impact. Ainsi, la zone d'interaction sera parfaitement protégée et le processus de soudage laser sera encore plus performant.

En particulier, en utilisant une buse selon FR-A-0107245 , la conservation du caractère laminaire de l'écoulement gazeux au-delà de l'embouchure de la buse sera obtenue grâce à l'embout échancré de la buse qui est traversée par le faisceau laser, les flans de l'embout apportant un guidage supplémentaire du gaz de protection.

De plus, avec une telle buse, il est possible de mettre en oeuvre un fil « chaud », c'est-à-dire un fil ayant subi un préchauffage par effet Joule, puisque ainsi on peut contrôler l'environnement gazeux sur toute la longueur de fil préchauffée.

### Exemple

Afin de démontrer l'efficacité du procédé de l'invention des essais comparatifs de soudo-brasage laser ont été réalisés en utilisant un générateur laser de type Nd :YAG pour générer le faisceau laser et des fils fusibles en cupro-silicium (CuSi₃) de 1.6 mm de diamètre en tant que métal d'apport.

Les pièces soudées étaient en acier galvanisé, c'est-à-dire avec revêtement superficiel de zinc, ayant une épaisseur de 0.8 mm.

Le gaz de protection mis en oeuvre était un mélange équi-volumique Ar/O₂ selon l'invention (essai E) ou, le cas échéant, des gaz selon l'art antérieur (Essais A à D). Dans l'essai B, le soudo-brasage est opéré sans gaz de protection, donc à l'air ambiant.

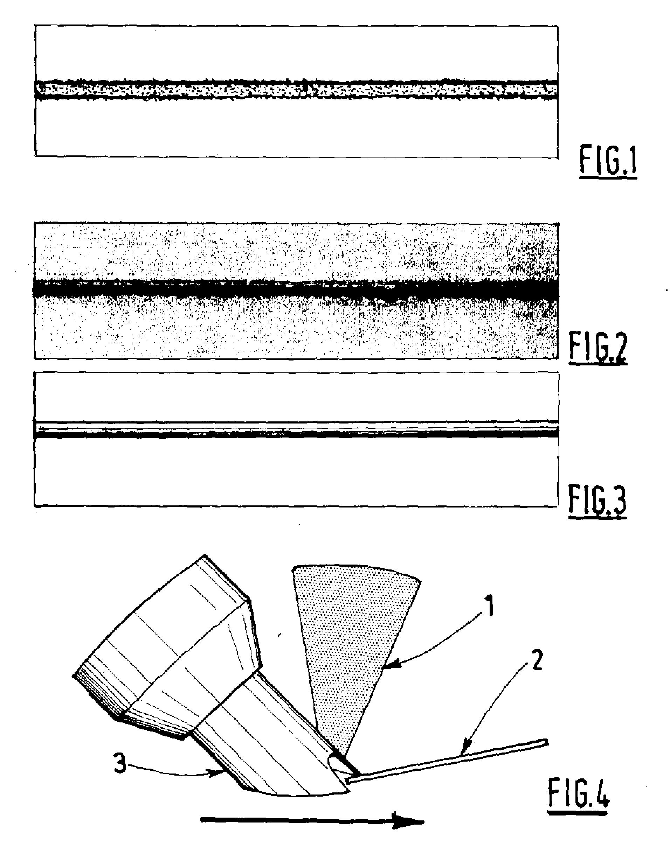

Les débits de gaz étaient de 20 I/min et la pression d'environ 1 bar, c'est-à-dire légèrement supérieure à la pression atmosphérique. Les gaz sont distribués au moyen d'une buse 1 échancrée telle que schématisée en Figure 4.

Les résultats sont consignés dans le Tableau ci-après.

**Tableau**

| Essai N° | Gaz | Puissance laser (en kW) | Vitesse de soudage (m/min) | Vitesse de fil (m/min) | Aspect de cordon | Figures |
|---|---|---|---|---|---|---|
| A | Argon pur | 3 | 1.5 | 1.2 | Bon | / |
| B | air | 2,7 | 2 | 1.5 | mauvais | 1 |
| | Ar + 30% | | | | | 2 |
| C | O₂ | 4 | 2.5 | 2.2 | Bon | |
| | Ar + 20% | | | | | / |
| D | CO₂ | 3 | 1.5 | 1.2 | Bon | |
| E | 50% Ar + | | | | | |
| (invention) | 50% O₂ | 4 | 2.5 | 2.2 | Excellent | 3 |

| | | | | | | |
|---|---|---|---|---|---|---|
| Mauvais : Aspect de surface rugueux, dépôt de fumées sur les bords du cordon, cordon peu « mouillé ». Bon : Cordon lisse, faible dépôt de fumées sur les bords du cordon, « mouillage » acceptable. Excellent : Cordon très lisse, pas de dépôt de fumées et mouillage excellent. | | | | | | |

La Figure 1 montre le cordon de soudure obtenu dans l'essai B, c'est-à-dire sans protection gazeuse, donc en exposant le cordon à l'air ambiant. On voit que le cordon est de mauvaise qualité puisqu'il comporte des dépôts de fumée, un aspect de surface rugueux et qu'il est bombé.

La Figure 2 montre le cordon de soudure obtenu dans l'essai C, c'est-à-dire avec un mélange selon l'art antérieur, comportant une proportion d'oxygène de seulement 30% environ. Comme on le voit, le cordon obtenu n'est pas parfait car on observe encore des dépôt de fumées sur les bords ainsi que des irrégularité en surface.

La Figure 3 montre le cordon de soudure obtenu dans l'essai E, c'est-à-dire avec un mélange selon l'invention. Comme on le voit, le cordon présente un très bel aspect de surface avec un cordon lisse, stable, très brillant et sans de dépôts de fumées.

Par ailleurs, lorsqu'on considère les vitesses de soudage obtenues (cf. Tableau), on constate qu'avec les mélanges gazeux de l'invention, la vitesse de soudage est à son maximum, à savoir une vitesse de 2.5 m/min.

Le procédé de l'invention permet donc d'augmenter non seulement la qualité du cordon obtenu mais aussi d'avoir une vitesse de soudage élevée, donc de conserver une bonne productivité.

## Revendications

1. Procédé de soudo-brasage de pièces en acier mettant en oeuvre un faisceau laser, un fil fusible étant que métal d'apport, et un mélange gazeux en tant que protection gazeuse, de manière à réaliser un joint soudo-brasé entre les pièces, **caractérisé en ce que** :
- le fil fusible contient du cuivre et
- le mélange gazeux contient de 40 à 60% d'oxygène et d'au moins gaz choisi parmi l'argon, l'azote et l'hélium pour le reste.

2. Procédé selon la revendication 1, **caractérisé en ce que** le mélange gazeux contient de 45 à 55% d'oxygène.

3. Procédé selon l'une des revendications 1 ou 2, **caractérisé en ce que** le mélange gazeux contient environ 50 % d'oxygène.

4. Procédé selon l'une des revendications 1 à 3, **caractérisé en ce que** le mélange gazeux contient de l'argon.

5. Procédé selon l'une des revendications 1 à 4, **caractérisé en ce que** le fil fusible est formé d'un alliage de cuivre et de silicium ou d'aluminium.

6. Procédé selon l'une des revendications 1 à 5, **caractérisé en ce que** les pièces sont en acier revêtu.

7. Procédé selon l'une des revendications 1 à 6, **caractérisé en ce que** le faisceau laser est obtenu au moyen d'un générateur laser de type Nd :YAG, CO₂, à fibre dopée à l'ytterbium ou à diodes.

8. Procédé selon l'une des revendications 1 à 7, **caractérisé en ce que** le gaz est distribué par une buse comportant une échancrure ou un orifice traversé par le faisceau laser.

9. Procédé selon l'une des revendications 1 à 8, **caractérisé en ce que** le débit de gaz est compris entre 5 et 30 I/min.

10. Procédé selon l'une des revendications 1 à 9, **caractérisé en ce que** le diamètre de fil est compris entre 0.8 et 2.4 mm.
